# EUROPÄISCHE PATENTSCHRIFT

(11) **EP 0 507 789 B1**
(45) Veröffentlichungstag und Bekanntmachung des Hinweises auf die Patenterteilung: **20.09.1995**
(21) Anmeldenummer: 91900756.7
(22) Anmeldetag: 17.12.1990
(51) Int. Cl.: C08G 18/10

(54) **FEUCHTIGKEITSHÄRTENDE POLYURETHANDICHTUNGSMASSEN MIT VERBESSERTEN EIGENSCHAFTEN**
IMPROVED, MOISTURE-CURING POLYURETHANE SEALING COMPOUNDS
MATIERES D'ETANCHEITE EN POLYURETHANE DURCISSANT A L'HUMIDITE AYANT DES PROPRIETES AMELIOREES

(30) Priorität: 27.12.1989 DE 3943090
(43) Veröffentlichungstag der Anmeldung: 14.10.1992
(73) Patentinhaber: Henkel Kommanditgesellschaft auf Aktien, 40191 Düsseldorf (DE)
(72) Erfinder: PODOLA, Tore, D-4019 Monheim (DE); MAJOLO, Martin, D-5240 Erkelenz (DE)
(86) Internationale Anmeldenummer: EP9002212
(87) Internationale Veröffentlichungsnummer: WO9109893

(56) Entgegenhaltungen:
- EP-A- 0 259 644
- EP-A- 0 268 780
- EP-A- 0 293 084
- EP-A- 0 300 304
- EP-A- 0 303 136
- EP-A- 0 305 805
- EP-A- 0 326 704
- DE-A- 3 629 237

## Beschreibung

Die Erfindung betrifft feuchtigkeitshärtende Fugendichtungsmassen auf der Basis von NCO-terminierten Polyurethanprepolymeren. Sie beschreibt ein derartiges System mit verbesserten Eigenschaften durch Zusatz reaktiver Polysiloxane.

Feuchtigkeitshärtende Dichtungsmassen auf Polyurethanbasis sind dem Fachmann gut bekannt z.B. aus der DE 37 26 547. Sie bestehen im wesentlichen aus Polyurethanprepolymeren mit endständigen Isocyanatgruppen und darin als Thixotropierungsmittel bzw. Füllstoff enthaltenen gequollenen Polymeren. In der genannten DE 37 26 547 werden darüber hinaus als weitere Bestandteile Weichmacher, Quellhilfsmittel, Pigmente, Farbstoffe, Stabilisierungsmittel, Katalysatoren und sonstige Hilfsstoffe genannt. Wenn auch die bislang bekannten Polyurethan-Fugendichtungsmassen den hohen und vielfhältigen Anforderungen im großen und ganzen gerecht werden, so erscheinen einige Teilaspekte verbesserungsbedürftig. Dies betrifft insbesondere die Witterungsbeständigkeit. Ein wesentlicher Faktor ist hier die UV-Stabilität. Ein wesentliches Kriterium zur Bestimmung der Langzeitstabilität bewitterter Fugendichtungsmassen neben der visuellen Begutachtung sind die Reißdehnungswerte, die aufgabengemäß verbessert werden sollen. Auch hinsichtlich der Verarbeitungseigenschaften, wie Fadenabriß und Glättbarkeit, sind Verbesserungen wünschenswert.

Zur Verbesserung der UV-Stabilität ist es dem Fachmann z.B. aus der Offenlegungsschrift der DE 32 21 655 bekannt, Dichtungsmassen UV-Absorptionsmittel wie Benzophenon oder Trioxazolderivate beizumischen. Diese bewirken primär eine erhöhte UV-Stabilität, die allerdings nicht permanent ist. Es ist dem Fachmann bekannt, daß Fugendichtungsmassen auf Basis von Polysiloxanen üblicherweise eine höhere UV-Stabilität besitzen als vergleichbare Polyurethandichtungsmassen. Handelsübliche Polysiloxan-Dichtungsmassen weisen jedoch meistens für einige Anwendungszwecke durchaus unerwünschte Eigenschaften auf, von denen die schlechte Anstrichfähigkeit, das "Ausfetten" und Geruchsbelästigungen bei der Verarbeitung beispielhaft genannt seien. Mischungen aus beiden Komponenten sind - wenn überhaupt - nur mit hohem technischen Aufwand zu realisieren und lassen hinsichtlich der Lagerstabilität stark zu wünschen übrig, d.h. derartige Systeme haben eine starke Neigung zur Entmischung. Der Versuch dies durch Zusätze wie Dispersionshilfsmittel und/oder Emulgatoren zu unterbinden, führt zu unerwünschten Beeinträchtigungen anderer anwendungstechnischer Eigenschaften der Fugendichtungsmassen.

Der Einsatz reaktiver Polysiloxane in Polyurethan-Dichtungsmassen zur Verbesserung der Witterungsstabilität gehört bislang nicht zum Wissensstand des Fachmanns. Zwar sind Verbindungen von Siloxanen und Urethanen grundsätzlich bekannt, jedoch unterscheiden sich diese von der vorliegenden Erfindung durch den molekularen Aufbau und/oder liegen auf anderem technologischen Gebiet. So werden in der EP 250 248 Blockcopolymere aus Polysiloxanen und Urethan-Segmenten beschrieben, welche aus Diaminopolysiloxanen und Diisocyanaten hergestellt werden und als drucksensitive (Haft)Klebstoffe zum Einsatz kommen. In der EP-Anmeldung EP 293 084 ist beschrieben, daß reaktive Polysiloxane in Polyurethan-Gleitlacken enthalten sind, um deren Gleiteigenschaften zu verbessern.

Die EP-A-305 805 beschreibt wasserhärtende Polyurethanzusammensetzungen, die ein Polyurethanprepolymer mit endständigen Isocyanatgruppen und ein Polysiloxan enthalten. Die Polysiloxane haben Hydroxylgruppen. Diese Zusammensetzungen können auch Lösungsmittel enthalten. Das Polyisocyanatprepolymer kann auch ein Umsetzungsprodukt eines Polyetherpolyols mit einem Diisocyanat sein.

Die EP-A-259 644 beschreibt auch wasserhärtende Polyurethanzusammensetzungen, die Hydroxyl-terminierte Polysiloxane enthalten.

Die DE-A-36 29 237 beschreibt feuchtigkeitshärtende Polyurethandichtungsmassen, die durch Reaktion eines Urethanprepolymers mit einem Silan hergestellt worden sind. Sie enthält jedoch keine Hinweise, daß man durch Benutzung eines reaktiven Polysiloxans anstelle eines Silans um das Urethanpolymer zu modifizieren, die UV-Stabilität von solchen feuchtigkeitshärtenden Polyurethandichtungsmassen verbessern kann.

Aufgabe der Erfindung ist es, feuchtigkeitshärtende PolyurethanFugendichtungsmassen bereitzustellen, die eine verbesserte Langzeitstabilität unter Witterungsbedingungen und insbesondere gegenüber UV-Strahlung aufweisen. Darüber hinaus sollen die verarbeitungstechnischen Eigenschaften wie Fadenabriß und Glättbarkeit deutlich verbessert werden.

Diese Aufgabe wurde erfindungsgemäß gelöst durch feuchtigkeitshhärtende Fugendichtungsmassen auf Basis von NCO-terminierten Polyurethanprepolymeren mit im Mittel 2 oder mehr Isocyanatgruppen im Molekül, die gewünschtenfalls isocyanat-inerte Füllstoffe, Weichmacher, Polymerpulver als Thixotroprenmittel, Quellhilfsmittel, die mit da Polymerpulver und dem Weichmacher mischbar sind, und/oder weitere Additive enthalten, dadurch gekennzeichnet, daß zur Verbesserung der Langzeitstabilität unter Witterungsbedingungen reaktive Polysiloxane enthalten sind, die eine oder mehrere funktionelle Gruppen aufweisen, die mit den Polyurethanprepolymeren und/oder den daraus in Folge der Feuchtigkeitshärtung gebildeten Verbindungen reagieren, wobei die Fugenmassen
- 20 bis 40 Gew.-% Polyurethanprepolymere
- 20 bis 40 Gew.-% quellfähige Polymerpulver aus Polyacrylnitril, Polyurethan, Polyvinylchlorid, Polyacrylsäureester und Polyvinylacetat,
- 15 bis 35 Gew.-% Weichmacher (Quellmittel),
- 0 bis 10 Gew.-% organische Lösungsmittel ausgewählt aus Estern, Ketonen, aliphatischen und aromatischen Kohlenwasserstoffen, die mit dem Polymerpulver und dem Weichmacher mischbar sind und die mit den Isocyanatgruppen der Polyurethanprepolymere nicht reagieren;
- 1 bis 10 Gew.-% Pigmente und Farbstoffe,
- 1,0 bis 12 Gew.-% reaktive Polysiloxane und
- 1 bis 10 Gew.-% Stabilisierungsmittel
enthalten.

Die erfindungsgemäßen feuchtigkeitshärtenden Fugendichtungsmassen enthalten Polyurethanprepolymere mit im Mittel zwei oder mehr Isocyanatgruppen pro Molekül. Diese Polyurethanprepolymeren werden hergestellt durch Vermischen von Alkoholen der Funktionaliät 2 und größer mit einem Überschuß an Isocyanatgruppen der Funktionalität 2 und größer. Dabei können durch die Wahl der Einsatzmengen die Eigenschaften der Produkte beeinflußt werden.

Als Polyolkomponenten können sowohl niedermolekulare als auch hochmolekulare Verbindungen eingesetzt werden. Niedermolekulare Verbindungen, die als Polyolkomponenten für Polyurethanprepolymere verwendet werden können, sind beispielsweise Ethylenglycol, Propylen glycol, Neopentylglycol, 1,4-Butandiol, 1,6-Hexandiol sowie Triole wie Glycerin, Trimethylolpropan oder Trimethylolethan sowie höherfunktionelle Hydroxy-Verbindungen wie Pentaeritrit.

Als höhermolekulare Polyolkomponente werden in der Regel Polyetherpolyole und/oder Polyesterpolyole verwendet. Polyetherpolyole können durch Umsetzung eines Epoxyds oder Tetrahydrofurans mit einer niedermolekularen Polyolkomponente dargestellt werden, wobei als Epoxyd beispielsweise Ethylenoxyd, Propylenoxyd, Butylenoxyd, Styroloxyd, Cyclohexenoxyd, Trichlorbutylenoxyd und Epichlorhydrin und als Polyol z.B. Verbindungen wie Ethylen-, Diethylen- und Propylenglycol Verwendung finden.

Polyester als Ausgangsstoffe für Polyurethanprepolymere werden üblicherweise durch Umsetzung von Hydroxylverbindungen mit Carbonsäuren dargestellt. Als Hydroxylverbindungen können die bereits genannten niedermolekularen mehrfunktionellen Hydroxylkomponenten eingesetzt werden. Als Säurekomponente sind Verbindungen wie Adipinsäure, Phtalsäure, Oxalsäure, Maleinsäure, Bernsteinsäure, Glutarsäure, Acelainsäure, Sebacinsäure sowie Tricarbonsäuren geeignet. Auch durch ringöffnende Polymerisation von beispielsweise Epsilon-Caprolacton oder Methyl-epsilon-caprolacton lassen sich geeignete Polyester zur Darstellung von Polyurethanprepolymeren gewinnen. Neben Polyestern und Polyethern als Polyolkomponente können aber auch Naturstoffe, sogenannte oleochemische Polyole oder z.B. Rizinusöl eingesetzt werden.

Im Rahmen der Erfindung sind als Polyole Polyetherpolyole bevorzugt, insbesondere solche Polyetherpolyole, die durch Umsetzung von Glycerin, Propylenoxidaddukten und Polypropylenglycol dargestellt werden können.

Als Isocyanatkomponente können sowohl aromatische als auch aliphatische und/oder cycloaliphatische Isocyanate Verwendung finden. Geeignete Isocyanate mit einer Funktionalität von 2 und größer sind beispielsweise die Isomeren des Toluylendiisocyanats, Isophorondiisocyanat, Dicyclohexylmethandiisocyanat, Tetramethylendiisocyanat, Trimethylhexamethylendiisocyanat, Trimethylxyloldiisocyanat, Hexamethylendiisocyanat und Diphenylmethandiisocyanat oder auch Triisocyanate wie z.B. 4,4',4''-Triphenylmethantriisocyanat. Im Rahmen der Erfindung sind die aromatischen Diisocyanate, insbesondere technisches Diphenylmethan-4,4'-diisocyanat (MDI) und Toluylendiisocyanat-2,4 (TDI) bevorzugt.

In einer bevorzugten Ausführungsform wird das Polyurethanprepolymere durch Umsetzung eines Glycerin-propylenoxyd-adduktes und/oder eines Polypropylenglycols mit technischem Diphenylmethandiisocyanat und/oder technischem Toluylendiisocyanat hergestellt. Dabei wird bevorzugt das Isocyanat im Überschuß eingesetzt, so daß das gebildete Polyurethanprepolymere reaktive NCO-Gruppen enthält.

Die Standfestigkeit von Fugendichtungsmassen wird in der Regel durch Zusatz von feinteiligen Feststoffen - auch Füllstoffe genannt - erzielt. Diese tragen im allgemeinen wesentlich dazu bei, daß die Dichtungsmasse nach der Anwendung einen notwendigen inneren Halt besitzt, so daß ein Auslaufen oder Ausbuchten der Dichtungsmasse aus senkrechten Fugen verhindert wird. Die genannten Zusatz- bzw. Füllstoffe lassen sich in Pigmente und thixotropierende Füllstoffe, auch verkürzt als Thixotropiermittel bezeichnet, einteilen. Bei den Fugendichtungsmassen auf der Basis von Polyurethanprepolymeren müssen an diese Thixotropiermittel zusätzliche Anforderungen gestellt werden. Beispielsweise sollen unerwünschte Reaktionen mit den Isocyanatgruppen ausgeschlossen sein. Daher kommen als Thixotropiermittel im wesentlichen quellfähige Polymerpulver aus Polyacrylnitril, Polyurethan, Polyvinylchlorid, Polyacrylsäureester, Polyvinylacetate sowie die entsprechenden Copolymerisate in Betracht. Besonders gute Ergebnisse lassen sich mit feinteiligem Polyvinylchloridpulver erhalten.

Die Eigenschaft der Polyurethan-Fugendichtungsmasse läßt sich noch weiter verbessern, wenn da als Thixotropiermittel verwendeten Kunststoffpulver weitere Komponenten zugesetzt werden. Dabei handelt es sich um Stoffe, die unter die Kategorie der für Kunststoffe angewendeten Weichmacher bzw. Quellmittel und Lösungsmittel fallen. Dabei ist es jeweils notwendig, die optimale Zusammensetzung der Systeme Prepolymer/Kunststoffpulver/Weichmacher/Quellhilfsmittel zu bestimmen. So dürfen z.B. Weichmacher und Lösungsmittel nicht mit den Isocyanatgruppen des Prepolymer reagieren. Es kommen somit z.B. für Polyvinylchloridpulver als Thixotropiermittel Weichmacher aus der Klasse der Phtalsäureester in Betracht. Beispiele für anwendbare Verbindungen aus dieser Substanzklasse sind Dioctylphtalat, Dibutylphtalat und Benzylbutylphtalat. Weitere Substanzklassen, die die geforderten Eigenschaften erfüllen, sind Chlorparaffine, Alkylsulfonsäureester etwa der Phenole oder Kresole sowie Fettsäureester, insbesondere PVC-Weichmacher wie Chlorparaffin und weichmachende Ester wie Phthalsäureester und Alkylsulfonsäureester. Im Rahmen der Erfindung sind insbesondere Weichmacher auf der Basis von Alkylsulfonsäureestern und Polyvinylchlorid als quellfähiges Polymerpulver bevorzugt.

Zur Verbesserung der Langzeitstabilität gegenüber Witterungseinflüssen enthalten die erfindungsgemäßen Fugendichtungsmassen reaktive Polysiloxane. Dabei handelt es sich um Polysiloxane, die in der Kette oder Seitenkette über zumindest eine - gegenüber isocyanatterminierten Dichtungsmassenbestandteilen und/oder den daraus infolge der Feuchtigkeitshärtung gebildeten Verbindungen - reaktionsfähige Gruppe verfügen. Dies sind beispielsweise epoxymodifizierte Polysiloxane, Polyhydrognealkylsiloxane und/oder silanolmodifizierte Polysiloxane. Unter epoxymodifizierten Siloxanen versteht der Fachmann chemisch reaktive Silikonöle mit modifizierten Epoxyalkylseitengruppen. Desweiteren kann als reaktives Polysiloxan Polymethylwasserstoffsiloxan, auch Polymethylhydrogensiloxan genannt, enthalten sein. Silanolmodifizierte Siloxane sind Alkylsiloxanpolymere, die mindestens eine endständige Silanolgruppe besitzen. Diese sogenannten Silanolöle sind als reaktive Analoge der üblichen Silikonöle anzusehen. In den erfindungsgemäßen Fugendichtungsmassen ist bevorzugt hydroxyterminiertes Polydimethylsiloxan enthalten.

Wenn auch die genaue Ursache für die Verbesserung der Langzeitstabilität gegen Witterungseinflüsse insbesondere UV-Strahlung bei den erfindungsgemäßen Fugendichtungsmassen nicht genau geklärt ist, so läßt sich doch festhalten, daß diese Verbesserung wesentlich ist. Dies betrifft sowohl die visuelle Begutachtung der Oberfläche bewitterter erfindungsgemäßer Fugendichtungsmassen im Vergleich mit nicht-erfindungsgemäßen Polyurethan-Fugendichtungsmassen als auch für die Dehnungswerte und die Reißdehnung. Hinsichtlich der Verarbeitungseigenschaften lassen sich deutliche Unterschiede feststellen. Bei den erfindungsgemäßen Fugendichtungsmassen sind Fadenabriß und Glättbarkeit bei der Verarbeitung wesentlich besser als bei herkömmlichen Polyurethan-Fugendichtungsmassen. Auch wirken die erfindungsgemäßen Fugendichtungsmassen sämiger, wie sich einfach sensorisch feststellen läßt. Ebenfalls sensorisch feststellen kann man bei den erfindungsgemäßen Fugendichtungsmassen eine deutliche Verringerung der für die Polyurethan-Fugendichtungsmassen typischen Oberflächenklebrigkeit nach der Hautbildung beim Aushärten.

Es läßt sich vermuten, daß die genannten verbesserten Eigenschaften unter anderem dadurch zustande kommen, daß hier zwei an und für sich nicht bzw. nur schwer und/oder nicht dauerhaft miteinander mischbare Flüssigkeiten durch chemische Bindungen miteiander verknüpft werden, so daß eine Entmischung nicht möglich. Dabei ist jedoch der optische Eindruck der eines 2-Phasen-Systems, was sich dadurch verdeutlichen läßt, daß beim Mischen von an und für sich klaren Polyurethanpropolymeren mit an sich klaren reaktiven Polysiloxanen das Gemisch opak bis trübe wird bzw. wie eine feindisperse Emulsion aussieht. Die reaktiven Polysiloxane, deren reaktive Gruppen vorzugsweise endständig sind, können beim Mischen mit den Polyisocyanatgruppen und/oder den daraus infolge der Feuchtigkeitshärtung gebildeten Gruppen der Polyurethanprepolymeren reagieren, wodurch ein Entmischungsprozeß dauerhaft unterbunden wird.

In einer bevorzugten Ausführungsform weisen die reaktiven Polysiloxane nur eine reaktive Gruppe auf, die mit der reaktiven Gruppe eines Polyurethanprepolymeren reagieren kann, so daß die Polysiloxane nach erfolgter Reaktion jeweils den Abschluß eines Polyurethanmakromoleküls bilden. Es lassen sich dann besonders günstige Verarbeitungseigenschaften der erfindungsgemäßen Fugendichtungsmassen feststellen.

Ebenfalls günstig auf die Verarbeitungseigenschaften sowie auf die Langzeitstabilität wirkt es sich aus, wenn die Viskosität der reaktiven Polysiloxane bei 23°C in einem bevorzugten Bereich von 20 bis 500 Pas, vorzugsweise von 50 bis 400 Pas, liegt.

Ebenfalls bedeutsam für die Optimierung bzw. Verbesserung der genannten Eigenschaften der Fugendichtungsmassen ist das Verhältnis der Menge reaktiver Polysiloxane zu der Menge der Polyurethanprepolymeren. Hier wird ein Bereich von 5 bis 30 Gew.-%, insbesondere von 5 bis 20 Gew.-%, reaktive Polysiloxane bezogen auf die Menge Polyurethanprepolymere bevorzugt. Weniger als 1 Gew.-% reaktive Siloxane zeigen keine nennenswerte Verbesserung der Witterungsstabilität der Fugendichtungsmassen. Fugendichtungsmassen mit mehr als 30 Gew.-% reaktiver Siloxane lassen sich zwar durchaus als solche verarbeiten, führen jedoch zu unerwünscht deutlichen Beeinträchtigungen anwendungstechnischer Eigenschaften. So können z. B. die elastischen Eigenschaften, insbesondere das Rückstellvermögen, schlechter werden und nach Bewitterung Schwundrisse an der Oberfläche auftreten. Ein hoher Anteil an Polysiloxanen führt darüber hinaus im allgemeinen zu einer sensorisch "fettigen", leicht anschmutzbaren Oberfläche und zu einer Verminderung der Dehnungsfähigkeit.

Eine feuchtigkeitshärtende Fugendichtungsmasse, die der erfindungsgemäßen Aufgabe genügt, besteht vorzugsweise aus 25 bis 35 Gew.-% Polyurethanprepolymer, 25 bis 35 Gew.-% quellfähigem Polymerpulver, 20 bis 30 Gew.-% Weichmacher bzw. Quellmittel, 3 bis 7 Gew.-% Lösungsmittel, 1 bis 10 Gew.-% reaktiver Siloxane, 4 bis 9 Gew.-% Pigmente und Farbstoffe, 1 bis 5 Gew.-% Stabilisierungsmittel und gewünschtenfalls 0,01 bis 2 Gew.-% Katalysatoreh und sonstiger Hilfsstoffe.

Als Lösungsmittel (Quellhilfsmittel) sind solche niedermolekularen organischen Substanzen einsetzbar, die mit dem Polymerpulver und dem Weichmacher mischbar sind, aber mit den Isocyanatgruppen des Polyurethanprepolymeren nicht reagieren. Derartige Lösungsmittel lassen sich den einschlägigen Kunststoff- und Polymer-Handbüchern für den Fachmann entnehmen. Als bevorzugte Lösungsmittel für Polyvinylchloridpulver dienen Ester, Ketone, aliphatische Kohlenwasserstoffe, aromatische Kohlenwasserstoffe sowie aromatische Kohlenwasserstoffe mit Alkylsubstituenten. Die letztgenannten, insbesondere das Xylol, werden als bevorzugte Lösungsmittel für Polyvinylchloridpulver im Rahmen der Erfindung verwendet.

Als Pigmente und Farbstoffe in der erfindungsgemäßen Fugendichtungsmasse werden die für diese Verwendungszwecke bekannten Substanzen wie Titandioxid, Eisenoxide und RuB verwendet. Zur Verbesserung der Lagerstabilität werden bekanntermaßen den Fugendichtungsmassen Stabillsatoren wie Benzoylchlorid, Acetylchlorid, Toluolsulfonsäuremethylester, Carbodiimide und/oder Polycarbodliimide zugesetzt. Als besonders gute Stebilisatoren haben sich Olefine mit 8 bis 20 Kohlenstoffatomen erwiesen. Neben der stabilisierenden Wirkung können diese auch Aufgaben von Weichmachern bzw. Quellmitteln erfüllen. Bevorzugt werden Olefine mit 8 bis 18 Kohlenstoffatomen, insbesondere wenn die Doppelbindung in 1,2-Stellung angeordnet ist. Beste Ergebnisse erhält man, wenn die Molekülstruktur dieser Stabilisatoren linear ist.

Daneben enthalten die Fugendichtungsmassen noch Katalysatoren wie Dibutylzinndilaurat, -diacetat und/oder Zinn(II)-octoat zur Reaktionsbeschleunigung in katalytisch wirksamen Mengen, insbesondere 0,01 bis 10 Gew.-%, bezogen auf die Fugendichtungsmasse. Unter sonstigen Hilfsstoffen im Rahmen der erfindungsgemäßen Lehre sind beispielsweise Härter, Trockner und Haftvermittler zu verstehen.

Das in der erfindungsgemäßen Fugendichtungsmasse verwendete Gemisch aus Polyurethanprepolymer, Polymerpulver, Weichmacher, Lösungsmitteln, Pigmenten und Farbstoffen, reaktiven Polysiloxanen, Stabilisatoren sowie Katalysatoren und sonstigen Hilfsstoffen ist in Abhängigkeit von den im speziellen Fall an die Fugendichtungsmasse gestellten Anforderungen gezielt aufeinander abzustimmen. Bevorzugt im Rahmen der erfindungsgemäßen Lehre sind solche Fugendichtungsmassen, die 25 bis 35 Gew.-% Polyurethanprepolymere, 25 bis 35 Gew.-% quellfähige Polymerpulver, 20 bis 30 Gew.-% Weichmacher bzw. Quellmittel, 3 bis 7 Gew.-% Lösungsmittel, 4 bis 9 Gew.-% Pigmente und Farbstoffe, 1 bis 5 Gew.-% Stabilisierungsmittel und 1 bis 10 Gew.-% reaktive Polysiloxane und gewünschtenfalls 0,01 bis 2 Gew.-% Katalysatoren und sonstige Hilfsstoffe enthalten.

Die erfindungsgemäße Lehre wird anhand folgender Beispiele näher erläutert.

### Beispiele

Das in allen folgenden Beispielen verwendete Polyurethan wurde hergestellt aus
- 62 Gew.-Teilen Polypropylenglycol
- 24 Gew.-Teilen Polyetherpolyol und
- 15 Gew.-Teilen technischem Diphenylmethan-4,4'-diisocyanat (MDI).

Als reaktives Siloxan wurde Dihydroxypolydimethylsiloxan mit einer Viskosität von 350 Pas eingesetzt. Die Fugendichtungsmassen wurden wie folgt hergestellt:

Eine Paste aus Alkylsäuresulfonester, Chlorparaffin, PVC-Pulver und Pigmenten wurde auf 70°C aufgeheizt. Nach dem Abkühlen auf 40 °C wurde unter Rühren das Prepolymere und die weiteren Bestandteile zugegeben. Anschließend wurde bei 30 mbar entgast.

| Bestandteile | Beispiele (Nr.) | | | | | |
|---|---|---|---|---|---|---|
| | 1 | 2 | 3 | 4 | 5 | 6 |
| PU-Prepolymer | 29 | 29 | 29 | 29 | 29 | 29 |
| reaktive Polysiloxane | 0 | 0,5 | 1,0 | 2,0 | 4,0 | 6,0 |
| Alkylsulfonsäureester | 18,3 | 18,1 | 17,95 | 17,6 | 17,0 | 16,3 |
| Chlorparaffin | 7,9 | 7,8 | 7,75 | 7,6 | 7,3 | 7,1 |
| PVC-Pulver | 31,3 | 31,1 | 30,8 | 30,3 | 29,2 | 28,1 |
| TiO₂ | 5 | 5 | 5 | 5 | 5 | 5 |
| weitere Pigmente und Additive | 8,5 | 8,5 | 8,5 | 8,5 | 8,5 | 8,5 |

Beispiele 1 und 2 sind nicht erfindungsgemäß.

### Test der Verarbeitungseigenschaften

Bei den sensorischen Tests wurde für alle erfindungsgemäßen Beispiele eine deutliche Verbesserung der Verarbeitungseigenschaften wie Fadenabriß und Glättbarkeit festgestellt. Darüber hinaus wurde die für 1-Komponenten-Polyurethan-Fugendichtungsmassen typische Oberflächenk lebrigkeit nach der Hautbildung deutlich verringert.

### Test der Verbesserung der Langzeitstabilität unter Witterungsbedingungen

In speziellen Formen werden die Platten mit einer Dicke von ca. 3mm aus der Fugendichtungsmasse gezogen und nach der Vernetzung Prüfstäbe mit folgenden Abmessungen gestanzt:

| | |
|---|---|
| Gesamtlänge | ca. 80 mm |
| Kopfbreite | 20 mm |
| Steglänge | 50 mm |
| Stegbreite | 10 mm |
| Dicke | 1,0 - 4,0 mm |
| Meßlänge | 40 mm |

Die Reißfestigkeiten, Reidehnungen und Spannungswerte (Moduli) wurden in Anlehnung an DIN 53504 (Ausgabe 1975) bzw. ISO/R37 gemessen.

| | |
|---|---|
| Vorschubgeschwindigkeit | 150 m/min |
| Prüfraum | Normklima, 23°C / 50 % rel. Luftfeuchte |
| Zugprüfmaschine | Universalprüfmaschine |

Diese Maschine entspricht den allgemeinen Richtlinien für Werkstoffprüfmaschinen nach DIN 51220 und bezüglich der Prüfkraftanzeige der Klasse 1 nach DIN 51221.

Die Belichtung der Proben erfolgte im SUNTEST CPS mit Wasserflutung, ohne Filterung.

| Zyklus: | |
|---|---|
| Flutungsdauer | 10 min |
| Belichtungsdauer | 180 min |
| Zyklenanzahl | 150 |

### Belichtete Proben nach 150 Zyklen

| Nr | Reißfestigkeit N/mm² | Reißdehnung % | Spannungswerte (N/mm²) | |
|---|---|---|---|---|
| | | | Dehnung 100% | 600% |
| 1 | 0,98 | 1156 | 0,40 | 0,68 |
| 2 | 0,75 | 1138 | 0,38 | 0,66 |
| 3 | 0,90 | 1144 | 0,36 | 0,65 |
| 4 | 1,05 | 1257 | 0,37 | 0,66 |
| 5 | 1,01 | 1328 | 0,32 | 0,57 |
| 6 | 1,00 | 1372 | 0,31 | 0,60 |

Anhand der Tabelle ist zu erkennen, daß mit steigendem Gehalt an reaktivem Polysiloxan bei den vorliegenden erfindungsgemäßen Beispielen der Wert für die Reißdehnung deutlich erhöht wird, während die Spannungswerte für die Dehnung bei 100 und 600 Längen-% innerhalb dieser Reihe deutlich abnehmen.

Die Reißdehnungen, Spannungswerte und Zugfestigkeiten der unbelichteten Prüfkörper nach den Beispielen 1 bis 6 weisen kaum Unterschiede zueinander auf.

Darüber hinaus wurde eine visuelle Beurteilung der belichteten Prüfkörper nach dem Prinzip der Schulnoten vorgenommen. Bewertet wurde dabei die Oberflächenbeschaffenheit der Prüfkörper. Die Proben wiesen, entsprechend den nachfolgenden Noten unterschiedlich starke Rißbildung, auch Elefantenhaut genannt, auf.

| Nr. | Note |
|---|---|
| 1 | 5,0 |
| 2 | 4,5 |
| 3 | 3,0 |
| 4 | 2,5 |
| 5 | 2,0 |
| 6 | 2,0 |

## Patentansprüche

1. Feuchtigkeitshärtende Fugendichtungsmassen, die
- 20 bis 40 Gew.-% NCO-terminierte Polyurethanprepolymere mit im Mittel 2 oder mehr Isocyanatgruppen im Molekül,
- 20 bis 40 Gew.-% quellfähige Polymerpulver, ausgewählt aus Polyacrylnitril, Polyurethan, Polyvinylchlorid, Polyacrylsäureester und Polyvinylacetat,
- 15 bis 35 Gew.-% Weichmacher (Quellmittel),
die nicht mit den Isocyanatgruppen des Polyurethanprepolymers reagieren können,
- 0 bis 10 Gew.-% organische Lösungsmittel, ausgewählt aus Estern, Ketonen, aliphatischen und aromatischen Kohlenwasserstoffen, die mit dem Polymerpulver und dem Weichmacher mischbar sind und die mit den Isocyanatgruppen der Polyurethanprepolymere nicht reagieren;
- 1 bis 10 Gew.-% Pigmente und Farbstoffe,
- 1 bis 12 Gew.-% reaktive Polysiloxane,
die eine oder mehrere funktionelle Gruppen aufweisen, die mit den Polyurethanprepolymeren und/oder den daraus in Folge der Feuchtigkeitshärtung gebildeten Verbindungen reagieren,
- 1 bis 10 Gew.-% Stabilisierungsmittel,
enthalten.

2. Fugendichtungsmassen nach Anspruch 1, dadurch gekennzeichnet, daß reaktive Polysiloxane in Mengen von 5 bis 30 Gew.-%, insbesondere 5 bis 20 Gew.-%, jeweils bezogen auf die Menge Polyurethanprepolymere, enthalten sind.

3. Fugendichtungsmasse nach Ansprüchen 1 und 2, dadurch gekennzeichnet, daß sie epoxymodifizierte und/oder silanolmodifzierte Polysiloxane enthalten.

4. Fugendichtungsmassen nach mindestens einem der Ansprüche 1 bis 3, dadurch gekennzeichnet, daß die reaktiven Polysiloxane nur eine reaktive Gruppe aufweisen.

5. Fugendichtungmassen nach den Ansprüchen 1 bis 4, dadurch gekennzeichnet, daß sie 0,01 bis 10 Gew.-% Katalysatoren und sonstige Hilfsstoffe enthalten.

6. Fugendichtungsmassen nach Ansprüchen 1 bis 5, dadurch gekennzeichnet, daß sie
- 25 bis 35 Gew.-% Polyurethanprepolymere
- 25 bis 35 Gew.-% quellfähige Polymerpulver
- 20 bis 30 Gew.-% Weichmacher (Quellmittel)
- 3 bis 7 Gew.-% Quellhilfsmittel
- 4 bis 9 Gew.-% Pigmente und Farbstoffe
- 1 bis 10 Gew.-% reaktive Polysiloxane
- 1 bis 5 Gew.-% Stabilisierungsmittel und
- gewünschtenfalls 0,01 bis 2 Gew.-% Katalysatoren und sonstige Hilfsstoffe
enthalten.

7. Fugendichtungsmassen nach Ansprüchen 1 bis 6, dadurch gekennzeichnet, daß als Polyurethanprepolymer ein Umsetzungsprodukt eines Polyetherpolyols mit einem Überschuß eines Diisocyanats enthalten ist.

8. Fugendichtungsmassen nach Ansprüchen 1 bis 7, dadurch gekennzeichnet, daß als quellfahiges Polymerpulver Polyvinylchlorid (PVC) enthalten ist.

9. Fugendichtungmassen nach Ansprüchen 1 bis 8, dadurch gekennzeichnet, daß als Weichmacher PVC Weichmacher enthalten sind.

10. Fugendichtungsmassen nach Ansprüchen 1 bis 9, dadurch gekennzeichnet, daß als Lösungsmittel aromatische Kohlenwasserstoffe eingesetzt werden.

11. Fugendichtungsmassen nach Ansprüchen 1 bis 10, dadurch gekennzeichnet, daß als Stabilisatoren C₈- bis C₂₀-Olefine enthalten sind.

12. Fugendichtungsmassen nach mindestens einem der Ansprüche 1 bis 10, dadurch gekennzeichnet, daß als Stabilisator C₈- bis C₂₀-Olefine ohne Molekülverzweigung enthalten sind.

13. Fugendichtungsmassen nach mindestens einem der Ansprüche 1 bis 8, dadurch gekennzeichnet, daß als Weichmacher weichmachende Ester enthalten sind.

14. Fugendichtungsmessen nach Anspruch 1 oder 2, dadurch gekennzeichnet, daß. sie hydroxylterminiertes Polydimethylsiloxan enthalten.

## Claims

1. Moisture-curing jointing compounds containing
- 20 to 40% by weight of NCO-terminated polyurethane prepolymers containing on average two or more isocyanate groups in the molecule,
- 20 to 40% by weight of swellable polymer powder selected from polyacrylonitrile, polyurethane, polyvinyl chloride, polyacrylates and polyvinyl acetate,
- 15 to 35% by weight of plasticisers (swelling agents) which are unable to react with the isocyanate groups of the polyurethane prepolymer,
- 0 to 10% by weight of organic solvents selected from esters, ketones, aliphatic and aromatic hydrocarbons which are miscible with the polymer powder and the plasticiser and which do not react with the isocyanate groups of the polyurethane prepolymers,
- 1 to 10% by weight of pigments and dyes,
- 1 to 12% by weight of reactive polysiloxanes containing one or more functional groups which react with the polyurethane prepolymers and/or the compounds formed therefrom as a result of moisture curing,
- 1 to 10% by weight of stabilizers.

2. Jointing compounds as claimed in claim 1, characterized in that they contain reactive polysiloxanes in quantities of 5 to 30% by weight and, more particularly, in quantities of 5 to 20% by weight, based on the quantity of polyurethane prepolymers.

3. Jointing compounds as claimed in claims 1 and 2, characterized in that they contain epoxy-modified and/or silanol-modified polysiloxanes.

4. Jointing compounds as claimed in at least one of claims 1 to 3, characterized in that the reactive polysiloxanes contain only one reactive group.

5. Jointing compounds as claimed in claims 1 to 4, characterized in that they contain 0.01 to 10% by weight of catalysts and other auxiliaries.

6. Jointing compounds as claimed in claims 1 to 5, characterized in that they contain
- 25 to 35% by weight of polyurethane prepolymer
- 25 to 35% by weight of swellable polymer powder
- 20 to 30% by weight of plasticizer (swelling agent)
- 3 to 7% by weight of swelling aids
- 4 to 9% by weight of pigments and dyes
- 1 to 10% by weight of reactive polysiloxanes
- 1 to 5% by weight of stabilizers and
- if desired, 0.01 to 2% by weight of catalysts and other auxiliaries.

7. Jointing compounds as claimed in claims 1 to 6, characterized in that they contain a reaction product of a polyether polyol with an excess of a diisocyanate as the polyurethane prepolymer.

8. Jointing compounds as claimed in claims 1 to 7, characterized in that they contain polyvinyl chloride (PVC) as the swellable polymer powder.

9. Jointing compounds as claimed in claims 1 to 8, characterized in that they contain PVC plasticizers as the plasticizer.

10. Jointing compounds as claimed in claims 1 to 9, characterized in that aromatic hydrocarbons are used as the solvent.

11. Jointing compounds as claimed in claims 1 to 10, characterized in that they contain C₈₋₂₀ olefins as the stabilizer.

12. Jointing compounds as claimed in at least one of claims 1 to 10, characterized in that they contain C₈₋₂₀ olefins with no branching of the molecule as the stabilizer.

13. Jointing compounds as claimed in at least one of claims 1 to 8, characterized in that they contain plasticizing esters as the plasticizer.

14. Jointing compounds as claimed in claim 1 or 2, characterized in that they contain hydroxyl-terminated polydimethyl siloxane.

## Revendications

1. Matières d'étanchéité pour joints durcissant à l'humidité, gui renferment
- 20 à 40 % en poids de prépolymère de polyuréthane à terminaison(s) NCO, comportant en moyenne 2 ou plus de 2 groupes isocyanate dans la molécule,
- 20 à 40 % en poids de poudre de polymère gonflable, choisi parmi le polyacrylonitrile, le polyuréthane, le chlorure de polyvinyle, l'ester d'acide polyacrylique et l'acétate de polyvinyle,
- 15 à 35 % en poids de plastifiant (agent gonflant), ne pouvant pas réagir avec les groupes isocyanate du prépolymère de polyuréthane,
- 0 à 10 % en poids de solvants organiques, choisis parmi les esters, les cétones, les hydrocarbures aliphatiques et aromatiques, qui sont miscibles avec la poudre de polymère et le plastifiant et qui ne réagissent pas avec les groupes isocyanate des prépolymères de polyuréthane,
- 1 à 10 % en poids de pigments et de colorants,
- 1,0 à 12 % en poids de polysiloxanes réactifs comportant un ou plusieurs groupes fonctionnels, qui réagissent avec les prépolymères de polyuréthane et/ou les composés formés à partir de ceux-ci suite au durcissement à l'humidité
- 1 à 10 % en poids de stabilisant.

2. Matières d'étanchéité pour joints selon la revendication 1, caractérisées en ce qu'elles renferment des polysiloxanes réactifs en proportions de 5 à 30 % en poids, en particulier de 5 à 20 % en poids, dans chaque cas par rapport à la quantité de prépolymères de polyuréthane.

3. Matières d'étanchéité pour joints selon les revendications 1 et 2, caractérisées en ce qu'elles renferment des polysiloxanes à modification époxydique et/ou silanolique.

4. Matières d'étanchéité pour joints selon au moins une des revendications 1 à 3, caractérisées en ce que les polysiloxanes réactifs ne comportent qu'un seul groupe réactif.

5. Matières d'étanchéité pour joints selon les revendications 1 à 4, caractérisées en ce qu'elles renferment 0,01 à 10 % en poids de catalyseurs et d'autres adjuvants.

6. Matières d'étanchéité pour joints selon les revendications 1 à 5, caractérisées en ce qu'elles renferment
- 25 à 35 % en poids de prépolymères de polyuréthane
- 25 à 35 % en poids de poudre de polymère gonflable
- 20 à 30 % en poids de plastifiant (agent gonflant)
- 3 à 7 % en poids d'adjuvant de gonflement
- 4 à 9 % en poids de pigments et de colorants
- 1 à 10 % en poids de polysiloxanes réactifs
- 1 à 5 % en poids de stabilisants et
- le cas échéant, 0,01 à 2 % en poids de catalyseurs et d'autres adjuvants.

7. Matières d'étanchéité pour joints selon les revendications 1 à 6, caractérisées en ce qu'elles renferment comme prépolymère de polyuréthane un produit de réaction d'un polyétherpolyol avec un excès de diisocyanate.

8. Matières d'étanchéité pour joints selon les revendications 1 à 7, caractérisées en ce qu'elles renferment comme poudre de polymère gonflable, du chlorure de polyvinyle (PVC).

9. Matières d'étanchéité pour joints selon les revendications 1 à 8, caractérisées en ce qu'elles renferment comme plastifiant, un plastifiant pour PVC.

10. Matières d'étanchéité pour joints selon les revendications 1 à 9, caractérisées en ce qu'elles renferment comme solvant, des hydrocarbures aromatiques.

11. Matières d'étanchéité pour joints selon les revendications 1 à 10, caractérisées en ce qu'elles renferment comme stabilisant, des oléfines en C₈ à C₂₀.

12. Matières d'étanchéité pour joints selon au moins une des revendications 1 à 10, caractérisées en ce qu'elles renferment comme stabilisant, des oléfines en C₈ à C₂₀ sans ramification moléculaire.

13. Matières d'étanchéité pour joints selon au moins une des revendications 1 à 8, caractérisées en ce qu'elles renferment comme plastifiant, des esters plastifiants.

14. Matières d'étanchéité pour joints selon la revendication 1 ou 2, caractérisées en ce qu'elles renferment du polydiméthylsiloxane à terminaison(s) hydroxyle.
